# EUROPEAN PATENT APPLICATION

(11) **EP 4 818 035 A1**
(43) Date of publication of application: **07.10.2026**
(21) Application number: 25382324.9
(22) Date of filing: 01.04.2025
(51) Int. Cl.: B64C 3/38, B64C 29/00, B64C 39/08, B64U 10/20, B64U 30/10, B64U 30/297

(54) **WINGED VERTICAL TAKE-OFF AND LANDING MULTI-COPTER**

(71) Applicant: Fuvex Civil, SL, 31500 Tudela (ES)
(72) Inventor: CASTELLANO ALDAVE, Jesús Carlos, 31512 Fontellas (ES); VILLADANGOS ALONSO, Jesús, 31006 Pamplona (ES); ASTRAIN ESCOLA, José Javier, 31010 Barañain (ES)
(74) Representative: Torner, Juncosa I Associats, SL

(57) **Abstract**

Winged vertical take-off and landing multi-copter comprising a first frame (10), defining a first longitudinal, transversal and sagittal directions (X1, Y1, Z1), supporting multiple first propellers (11), rotatable around the first sagittal direction (Z1); a second frame (20), defining a second longitudinal, transversal and sagittal directions (X2, Y2, Z2), supporting at least one fixed wing (22) and multiple second propellers (21), rotatable around the second sagittal direction (Z2); the first and second frames (10, 20) are connected through a rotative joint free to rotate about an axis parallel to the first and second transversal directions (Y1, Y2); the at least one electric source (30) and the control unit (40) are connected to the first and second propellers (11, 21) and are configured to independently control the pitch angle of the first and second frames through the differential control of the thrust produced by the first and second propellers (11, 21).

## Description

### Technical field

The present invention relates to a winged vertical take-off and landing multi-copter, i.e. a multi-copter equipped with multiple propellers and wings and capable of taking off and landing in a vertical position without the need for a runway.

The vertical take-off and landing vehicles are commonly abbreviated as VTOL vehicles.

The proposed multi-copter is preferably a remotely controlled or an autonomous drone, but a manned multi-copter is also possible.

The proposed winged vertical take-off and landing multi-copter comprises a first frame, defining a first longitudinal, transversal and sagittal directions, supporting multiple first propellers, rotatable around the first sagittal direction, and a second frame, defining a second longitudinal, transversal and sagittal directions, supporting at least one fixed wing and multiple second propellers, rotatable around the second sagittal direction.

The first and second frames are connected through a rotative joint free to rotate about an axis parallel to the first and second transversal directions.

At least one electric source and the control unit are connected to the first and second propellers and are configured to independently control the pitch angle of the first and second frames through the differential control of the thrust produced by the first and second propellers.

### Background of the Invention

Vertical take-off and landing multi-copters are vehicles equipped with multiple independently controlled propellers, commonly referred to as multi-copters. Those vehicles are widely known, particularly in the form of drones but also as manned vehicles.

In those multi-copters all the lift is provided by the vertical thrust provided by the propellers. Therefore, in those type of vehicles the range, fly time and load capacity is limited.

It is also known that multi-copters can be equipped with fixed wings, which improves their lift during the horizontal advance of the vehicle, reducing power consumption and therefore extending flight time and/or increasing the vehicle's load capacity.

The most common configuration in this type of winged multicopter is for the propellers to propel the vehicle in the direction in which the fixed wings provide maximum lift. In other words, in flight position the propellers usually produce a backward thrust to propel the vehicle forward, with the fixed wings in horizontal position.

In this type of vehicle, VTOL capability is achieved by rotating the position of the propellers in relation to the wings during take-off and landing maneuvers, so that the propellers generate vertical thrust, stopping the horizontal advancement of the vehicle and therefore losing the lift provided by the wings. This solution increases the mechanical complexity of the vehicle, and therefore its cost and maintenance.

An alternative solution is for the whole vehicle, including its wings, to rotate until the impellers are in a position where they generate vertical thrust. This solution complicates the operation and control of the vehicle, requiring complicated maneuvers, limiting its use when the weather is not favorable. It also limits the vehicle's load capacity, as the vehicle's center of gravity must be very centered to allow for such maneuvers.

Other types of winged multi-copters are also known, for example through document US11905008B2. In this kind of winged multi-copters, the propellers and the wings are not perpendicular so that, when the wings are horizontal providing lift, the propellers are slightly tilted providing some vertical thrust and some advancement thrust. This solution does not allow for an independent control of the horizontal speed and of the pitch angle of the wings, since the propellers and the wings are at a fixed angle.

The present invention solves the above and other problems.

### Description of the Invention

The present invention concerns a winged vertical take-off and landing multi-copter. The proposed multi-copter comprises:
a first frame defining a first longitudinal direction (X1), a first transversal direction (Y1) and a first sagittal direction (Z1) orthogonal to each other, the first frame supporting multiple first propellers, each first propeller including one electric motor connected to at least one rotor rotatable around a central axis parallel to the first sagittal direction (Z1), the first propellers being separated in the first longitudinal and transversal directions (X1, Y1);
at least one electric source and a control unit connected to the first propellers and configured to modify the pitch angle and roll angle of the first frame through a differential control of the thrust produced by the first propellers;

The first frame supports multiple first propellers, each rotating around a central axis parallel to the central axis of the other first propellers, thus all the first propellers producing thrust in the same direction, which is the first sagittal direction (Z1).

When the first frame is in a non-advancing position, the first sagittal direction (Z1) is parallel to the vertical direction, the first longitudinal and transversal directions (X1, Y1) remain horizontal, and all the first propellers produce only vertical thrust.

Contrary, when the first frame is tilted and thus the first sagittal direction (Z1) is tilted regards the vertical direction, then the first propellers produce some vertical thrust and also some horizontal thrust, propelling the multi-copter in a horizontal direction. This horizontal thrust can be an advancement thrust, when the first transversal direction (Y1) remains horizontal, can be a lateral translation thrust, when the first longitudinal direction (X1) remains horizontal, or can be a combination of both when none the first longitudinal and transversal directions (X1, Y1) remain horizontal.

The control unit is configured to control the pitch angle, i.e. the rotation of the first frame around the first transversal direction (Y1), through a differential control of the thrust produced by the first propellers located on a front and a back half of the multi-copter in the longitudinal direction (X).

This pitch angle allows for changing the position of the first frame from the non-advancing position mentioned above where the first propellers only produce vertical thrust, to an advancing position in which the first frame and the first propellers attached thereto are tilted producing vertical thrust and horizontal thrust forwards or backwards.

This horizontal thrust can be used to produce the advance of the vehicle in the longitudinal direction (X), or to stabilize the vehicle against wind.

The control unit is configured to control the roll angle, i.e. the rotation of the first frame around the first longitudinal direction (X1), through a differential control of the thrust produced by the first propellers located on left half and right half of the multi-copter.

This roll angle allows for changing the position of the first frame from the non-advancing position mentioned above where the first propellers only produce vertical thrust, to a lateral translation position in which the first frame and the first propellers attached thereto are tilted producing vertical thrust and horizontal thrust leftwards or rightwards.

Each first propeller includes one electric motor which is feed with electricity from the electric source. Typically the electric source is an electric battery, for example a lithium electric battery, but it can be, or can include, an electric generator such an hydrogen fuel cell feed with hydrogen contained in a pressurized storage, or a combustion engine connected to an electric generator.

Up to this point, the characteristics described correspond to those of a conventional multicopter.

The proposed multi-copter further comprises, in a manner not known:
a second frame defining a second longitudinal direction (X2), a second transversal direction (Y2) and a second sagittal direction orthogonal to each other, the second frame supporting at least one fixed wing which extends in the second transversal direction (Y2) with a leading edge and a trailing edge separated in the second longitudinal direction (X2), and the second frame also supporting multiple second propellers, each second propeller including one electric motor connected to at least one rotor rotatable around a central axis parallel to the second sagittal direction (Z2), some second propellers being ahead and some behind the at least one fixed wing in the second longitudinal direction (X2);
the first and second frames have the corresponding first and second transverse directions (Y1, Y2) aligned and are connected through a rotative joint free to rotate about an axis parallel to the first and second transversal directions (Y1, Y2);
the at least one electric source and the control unit are also connected to the second propellers and configured to modify the pitch angle of the second frame, and of the at least one fixed wing attached thereto, through a differential control of the thrust produced by the second propellers.

According to the above, at least one fixed wing and multiple second propellers are attached to a second frame at a fixed relative positions and angles.

Each fixed wing is elongated in a second transversal direction (Y2) and comprises one leading edge and one trailing edge separated in a second longitudinal direction (X2), which typically is perpendicular to the second transversal direction (Y2).

In aerodynamics, the leading edge of a wing is the frontmost part that second meets the oncoming airflow, separating said airflow over and below the wing, and the trailing edge is the rearmost part of the wing where the airflow over and below the wing converges.

The second frame supports multiple second propellers, each rotating around a central axis parallel to the second sagittal direction (Z2), thus all the second propellers produce thrust in the same direction.

The second propellers are separated from each other at least in the second longitudinal direction (X2) and optionally also in the second transversal direction (Y2), those directions being orthogonal to each other and being orthogonal to the central axis of rotation of the second propellers.

The control unit is configured to control the pitch angle of the second frame and of the second propellers attached thereto, i.e. the rotation of the second frame around the second transversal direction (Y2), through a differential control of the thrust produced by the second propellers located ahead and behind the at least one fixed wing in the second longitudinal direction (X2).

This pitch angle allows for changing the position of the second frame from a neutral position, where the second propellers only produce vertical thrust, to a pitch position in which the second frame and the fixed wings attached thereto are tilted changing the pitch angle of the at least one fixed wing with independence of the pitch angle of the first frame.

Each first and second propeller comprises an electric motor and a rotor forming an airscrew, for example rotors comprising two, three, four, five or six radial blades. The independent control of the power output of each electric motor, controlled by the control unit, allows an individual control of the thrust produced by each first and second propeller.

### Brief description of the Figures

The foregoing and other advantages and features will be more fully understood from the following detailed description of an embodiment with reference to the accompanying drawings, to be taken in an illustrative and non-limitative manner, in which:

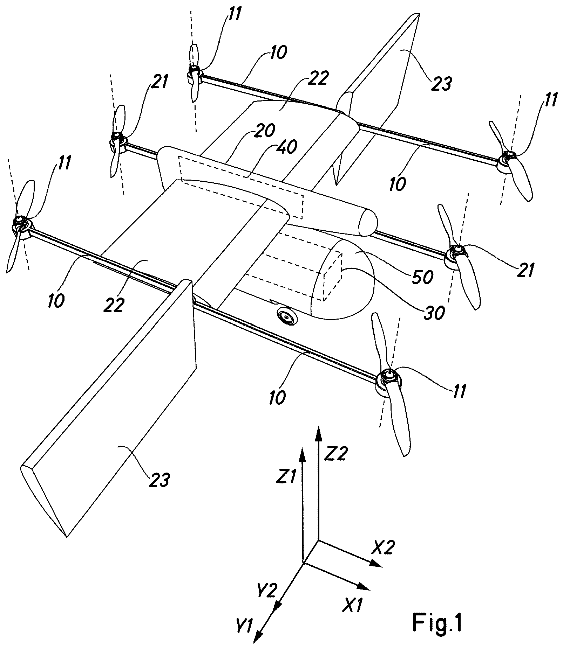

Fig. 1 is a perspective view of the multi-copter according to a first embodiment in which the first frame comprises four first propellers, the second frame comprises two second propellers, the multi-copter further including two free wings, one on each side of the fixed wings. In this Fig. 1 both the first and second frame are in a horizontal position with the first and second sagittal directions being vertical and the first and second propellers producing only vertical thrust.

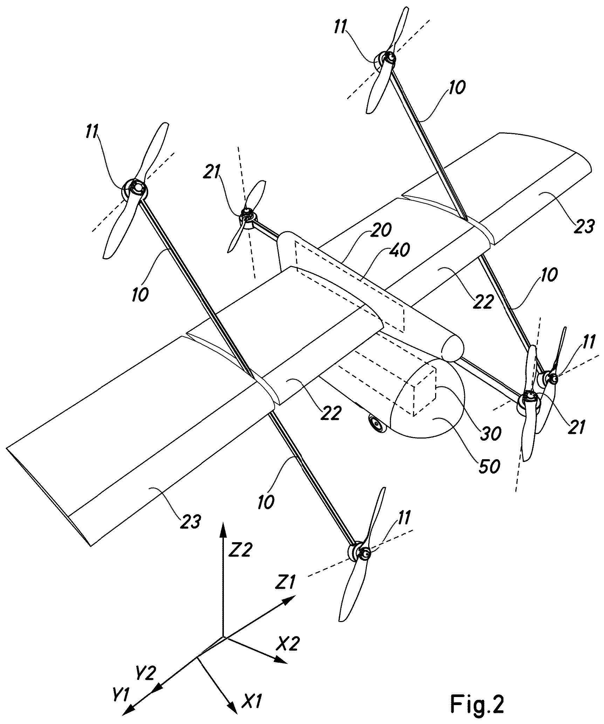

Fig. 2 is a perspective view of the same multi-copter shown in Fig. 1 but in this case being only the second frame in the horizontal position with the second sagittal direction being vertical, thus the second propellers producing only vertical thrust, and being the first frame tilted in an advancing position in which the first sagittal direction is not vertical.

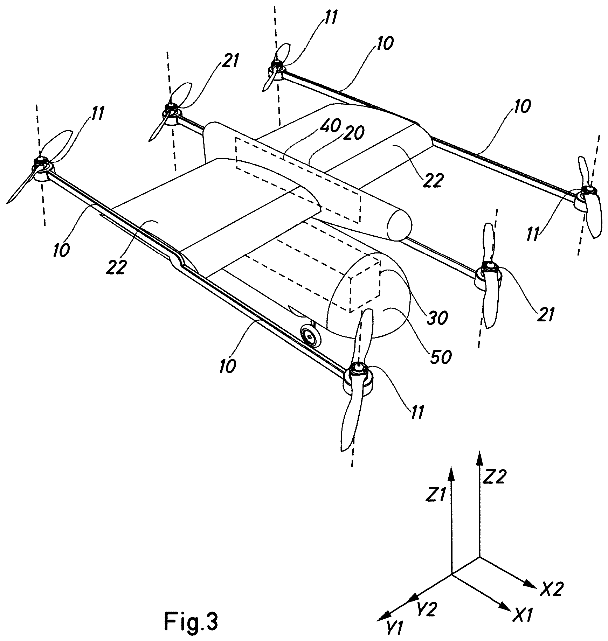

Fig. 3 is a perspective view similar to the one shown in Fig. 1 of a multi-copter similar to the one shown in Fig. 1 but lacking free wings.

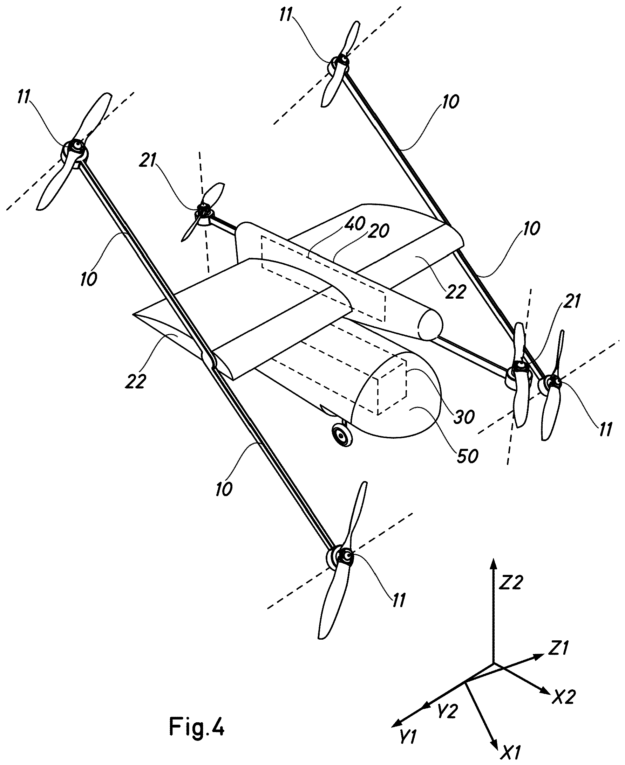

Fig. 4 is a perspective view of the same multi-copter shown in Fig. 3 but with the first frame in the advancing position as shown in Fig. 2.

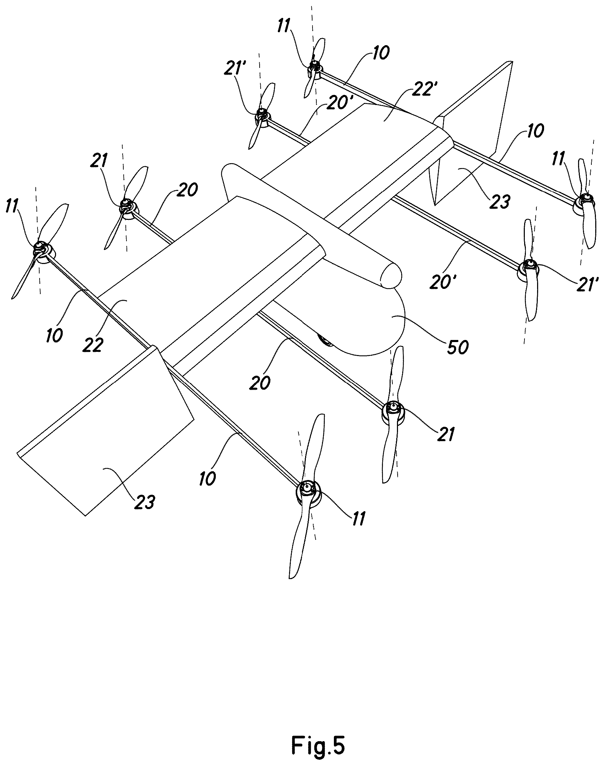

Fig. 5 is a perspective view similar to the one shown in Fig. 1 of a multi-copter similar to the one shown in Fig. 1 but including also an additional second frame with an additional fixed wing connected to additional second propellers, allowing for an independent control of the pitch angle of the fixed wing and of the additional fixed wing.

### Detailed Description of the Invention and of particular embodiments

The present invention concerns a winged vertical take-off and landing multi-copter comprising a first frame 10, including multiple first propellers 11 attached thereto, and a second frame 20, with multiple second propellers 21 at least one fixed wing 22 attached thereto, the first frame 10 and the second frame 20 being connected through an articulation. The first frame 10 defines a first longitudinal direction X1, a first transversal direction Y1 and a first sagittal direction Z1 orthogonal to each other, while the second frame 20 defines a second longitudinal direction X2, a second transversal direction Y2 and a second sagittal direction Z2 orthogonal to each other.

The first transversal direction Y1 of the first frame 10 is aligned with the second transversal direction Y2 of the second frame 20, being both the first and second frames 10, 20 articulated to each other through an articulation free to rotate about an axis parallel to the first and second transversal directions Y1, Y2.

According to this, the first and second frames 10, 20 can rotate independently one from the other, maintaining the first and second transversal directions Y1, Y2 always aligned but allowing to change the orientation of the first longitudinal and sagittal directions X1, Z1, and thus the pitch angle of the first frame 10, with independence to the orientation of the second longitudinal and sagittal directions X2, Z2, and thus the pitch angle of the second frame 20.

The pitch angle of the first frame determines the horizontal thrust produced by the first propellers and the pitch angle of the second frame determines the pitch angle of the at least one fixed wing 22, which determines the angle of attack of the fixed wing 22 in regards the air flow direction, controlling the aerodynamic sustentation and the vertical direction of the vehicle.

The first frame 10 includes multiple first propellers 11 separated in the first longitudinal direction X1 and in a first transversal direction Y1, and each first propeller 11 includes one electric motor connected to at least one rotor rotative around a central axis parallel to a first sagittal direction Z1. Therefore, when the first frame 10 is in a non-advancing position, in which the first sagittal direction Z1 is parallel to the vertical direction, the first propellers 11only produce vertical thrust.

The proposed multi-copter further comprises at least one electric source 30, such an electric battery and/or a hydrogen fuel cell, and a control unit 40 connected to the first propellers 11.

The control unit 40 is configured to modify the pitch angle of the first frame 10 through a differential control of the thrust produced by the first propellers 11 located ahead and behind the rotative joint connecting the first and second frames 10, 20 in the first longitudinal direction X1.

The fixed wing 22, supported on the second frame 20, extends in the second transversal direction Y2 with a leading edge and a trailing edge separated in the second longitudinal direction X2 when the second frame 20 is in a neutral position where the fixed wing 22 is horizontal.

The second frame 20 also supports multiple second propellers 21, each second propeller 21 including one electric motor connected to at least one rotor rotative around a central axis parallel to the second sagittal direction Z2.

In this case, when the second frame 20 is oriented with the second sagittal direction Z2 parallel to the vertical direction, those second propellers 21 do not provide advancing thrust to the vehicle but only vertical thrust, which provides lift added to the lift provided by the at least one fixed wing 22.

Some of the second propellers 21 are ahead and some are behind the at least one fixed wing 22 in the second longitudinal direction X2.

The at least one electric source 30 and the control unit 40 are also connected to the second propellers 21, the control unit 40 being configured to modify the pitch angle of the second frame 20, and of the at least one fixed wing 22 attached thereto, through a differential control of the thrust produced by the second propellers 21 located ahead and behind the at least one fixed wing 22.

When the pitch angle of the second frame 20 is modified, the second frame 20 rotates around the second transversal direction Y2, which remains horizontal, tilting the second longitudinal direction X2 to a tilted longitudinal direction, changing the orientation of the second propellers 21 from the neutral position in which they only produce vertical thrust to a tilted position in which they produce vertical and horizontal thrust.

Differential control of the second propellers 21, provided by the control unit 40, also compensates for the rotation around the second transversal direction Y2 induced by the aerodynamic behaviour of the fixed wing 22. This compensating effect provided by the differential control of the second propellers 21 eliminates the need to include passive moment-neutralizing surfaces, such a tailplane with a horizontal stabilizer, a canard, and/or a reflexed profile in the fixed wing, saving weight and aerodynamic losses.

The control unit 40 can calculate such differential control using information provided by the tilt sensors.

Similarly, the roll angle of the multi-copter can be modified, simultaneously changing the orientation of the first and second transversal directions Y1, Y2, which stand together.

According to one embodiment of the invention, the multi-copter can further comprise, at least one free wing 23 connected to the first or second frame 10, 20 through a rotative joint free to rotate about an axis parallel to the first and second transversal direction Y1, Y2 between two angular limit positions, allowing the at least one free wing 23 to automatically adjust its pitch angle between said two angular limit positions in response to an incident wind.

Preferably, the two angular limit positions are one passive position, in which each free wing 23 is oriented by gravity with the leading edge located above the trailing edge in the second sagittal direction Z2, and an active position in which the free wing 23 has the same pitch angle as the fixed wing 22, the free wing 23 having the leading edge located ahead of the trailing edge in the second longitudinal direction X2.

According to this, the free wing 23 can freely orient itself between a position in which the free wing 23 is oriented mostly in a vertical direction by gravity, when there is no incident wind, typically with the multi-copter being stationary, and an upper limit position in which the pitch angle of the free wing 23 is the same as the pitch angle of the fixed wing 22.

The aerodynamic pressure of the incident wind on the free wing 23 increases with the wind speed. The increasing aerodynamic force compensates for the effect of gravity on the free wing 23 and causes it to rise upwards until it reaches the same pitch angle as the pitch angle of the fixed wing 22, where a stopper prevents an additional increase in the angle of the free wing 23.

The two angular limit positions are typically spaced apart at least 90°.

Preferably, the first frame 10 and/or the second frame 20 includes a tilt sensor in communication with the control unit 40, which uses the information provided by the tilt sensor to optimize the regulation of the differential thrust of the first and/or second propellers 11, 21.

According to an additional embodiment, the electric source 30, or the electric source 30 and the control unit 40, are supported in a nacelle 50 suspended from the first frame 10 through a swivel joint freely rotatable about an axis parallel to the first longitudinal direction X1 and about an axis parallel to the first transversal direction Y1, or suspended from the second frame 20 through a swivel joint freely rotatable about an axis parallel to the second longitudinal direction X2 and about an axis parallel to the second transversal direction Y2.

Preferably, the nacelle 50 further includes at least one optical sensor, such an optical camera, an infrared camera, a LIDAR sensor or similar.

The first propellers 11 can be an even number of first propellers 11 arranged in pairs aligned in the first longitudinal direction X1.

The second propellers 21 can be also an even number of second propellers 21, arranged in pairs aligned in the second longitudinal direction X2.

According to a preferred embodiment, the first propellers 11 are four first propellers 11 arranged in two pairs or four pairs symmetrically distributed on left and right sides of the multi-copter.

In this case, the second propellers 21 can be one pair of second propellers 21 arranged in the center of the multi-copter, between the two pairs of first propellers 11.

Other configurations are also possible, for example one pair of first propellers 11 arranged in the center of the multi-copter and two pairs of second propellers 21 symmetrically distributed on left and right sides of the multi-copter.

Also, other configurations with an even number of first and/or second propellers 11, 21 is also possible. For example, a configuration including six first propellers 11 symmetrically distributed on left and right sides of the multi-copter, and one pair of second propellers 21 arranged in the center of the multi-copter, or three second propellers 21 with two of them located behind and one ahead of the fixed wing 22 in the second longitudinal direction X2, or vice versa.

The control unit 40 is preferably configured to adjust the roll angle of the multi-copter through a differential control of the thrust produced by the first and/or second propellers 11, 21 located on a left and right halves of the multi-copter. This adjustment produces a tilting of the multi-copter around the first and/or second longitudinal direction X1, X2, which remains horizontal, producing the tilting of the first and second transverse axis Y1 and Y2 allowing for a lateral movement of the multi-copter or compensating for a lateral wind.

Typically, on multi-copters half of the propellers rotate clockwise and the other half rotates counter-clockwise to prevent an unintended rotation of the vehicle.

The control unit 40 is preferably configured to adjust the yaw angle of the multi-copter through a differential control of the thrust produced by the first and/or second propellers 11, 21 rotating in a clockwise and counter-clockwise directions.

Preferably, the multi-copter lacks active control surfaces. The active control surfaces are aerodynamic surfaces of the aircraft which are actuated to adjust and control the aircraft's flight attitude. In the proposed multi-copter, the flight attitude can be fully controlled by the regulation of the first and second propellers, thus the active control surfaces are dispensable, thus reducing the mechanical complexity and the manufacturing and maintenance costs of the vehicle.

According to an additional embodiment of the invention, the vehicle can include an additional second frame 20', symmetric to the second frame 20 around a central plane perpendicular to the second transverse direction Y2, the additional second frame 20' supporting at least one additional fixed wing 22' and multiple additional second propellers 21', some ahead and some behind the at least one additional fixed wing 22'.

The additional second frame 20' will be connected to the first and second frames 10, 20 through a rotative joint free to rotate about an axis parallel to the first and second transversal directions Y1, Y2, allowing for an independent rotation of the first frame 10, the second frame 20 and the additional second frame 20'.

The at least one electric source 30 and the control unit 40 is also connected to the additional second propellers 21' and is configured to modify the pitch angle of the additional second frame 20', and of the at least one additional fixed wing 22' attached thereto, through a differential control of the thrust produced by the additional second propellers 21'.

According to this embodiment, the vehicle includes at least two fixed wings with an independently controlled pitch angle, one included in the second frame 20 and another included in the additional second frame 20'.

This independent control of the pitch angle of the two fixed wings allow for a control of the roll angle of the vehicle.

It will be understood that the additional second frame defines an additional second longitudinal direction, an additional second transversal direction which is coincident with the first and second transversal directions, an additional second sagittal direction (Z2), and that said at least one additional fixed wing 22' extends in the additional second transversal direction with a leading edge and a trailing edge separated in the additional second longitudinal direction.

Also, each of the mentioned additional second propellers 21' includes one electric motor connected to at least one rotor rotatable around a central axis parallel to the additional second sagittal direction, some additional second propellers 21' being ahead and some behind the at least one additional fixed wing 22' in the additional second longitudinal direction.

## Claims

1. Winged vertical take-off and landing multi-copter comprising:
a first frame (10) defining a first longitudinal direction (X1), a first transversal direction (Y1) and a first sagittal direction (Z1) orthogonal to each other, the first frame (10) supporting multiple first propellers (11), each first propeller including one electric motor connected to at least one rotor rotatable around a central axis parallel to the first sagittal direction (Z1), the first propellers (11) being separated in the first longitudinal and transversal directions (X1, Y1);
at least one electric source (30) and a control unit (40) connected to the first propellers (11) and configured to modify the pitch angle and roll angle of the first frame (10) through a differential control of the thrust produced by the first propellers (11);
**characterized in that** the multi-copter further comprises:
a second frame (20) defining a second longitudinal direction (X2), a second transversal direction (Y2) and a second sagittal direction (Z2) orthogonal to each other, the second frame (20) supporting at least one fixed wing (22) which extends in the second transversal direction (Y2) with a leading edge and a trailing edge separated in the second longitudinal direction (X2), and the second frame (20) also supporting multiple second propellers (21), each second propeller (21) including one electric motor connected to at least one rotor rotatable around a central axis parallel to the second sagittal direction (Z2), some second propellers (21) being ahead and some behind the at least one fixed wing (22) in the second longitudinal direction (X2);
the first and second frames (10, 20) have the corresponding first and second transverse directions (Y1, Y2) aligned and are connected through a rotative joint free to rotate about an axis parallel to the first and second transversal directions (Y1, Y2);
the at least one electric source (30) and the control unit (40) are also connected to the second propellers (21) and configured to modify the pitch angle of the second frame (20), and of the at least one fixed wing (22) attached thereto, through a differential control of the thrust produced by the second propellers (21).

2. The winged multi-copter according to claim 1 wherein the multi-copter further comprises at least one free wing (23) connected to the first or second frame (10, 20) through a rotative joint free to rotate about an axis parallel to the first and second transversal direction (Y1, Y2) between two angular limit positions, allowing the at least one free wing (23) to automatically adjust its pitch angle between said two angular limit positions in response to an incident wind.

3. The winged multi-copter according to claim 2 wherein the two angular limit positions are one passive position, in which each free wing (23) is oriented by gravity with the leading edge located above the trailing edge in the second sagittal direction (Z2), and an active position in which the free wing (23) has the same pitch angle as the fixed wing (22), the free wing (23) having the leading edge located ahead of the trailing edge in the second longitudinal direction (X2).

4. The winged multi-copter according to claim 2 or 3 wherein the two angular limit positions are spaced apart at least 90°.

5. The winged multi-copter, according to any preceding claim wherein the first frame (10) and/or the second frame (20) includes a tilt sensor in communication with the control unit (40).

6. The winged multi-copter according to any preceding claim wherein the electric source (30), or the electric source (30) and the control unit (40), are supported in a nacelle (50) suspended from the first frame (10) through a swivel joint freely rotatable about an axis parallel to the first longitudinal direction (X1) and about an axis parallel to the first transversal direction (Y1), or suspended from the second frame (20) through a swivel joint freely rotatable about an axis parallel to the second longitudinal direction (X2) and about an axis parallel to the second transversal direction (Y2).

7. The winged multi-copter, according to claim 6, wherein the nacelle (50) further includes at least one optical sensor.

8. The winged multi-copter according to any preceding claim wherein the first propellers (11) are an even number of first propellers (11) arranged in pairs aligned in the first longitudinal direction (X1).

9. The winged multi-copter according to any preceding claim wherein the second propellers (21) are an even number of second propellers (21), arranged in pairs aligned in the second longitudinal direction (X2).

10. The winged multi-copter according to any preceding claim wherein the control unit (40) is configured to adjust the yaw angle of the multi-copter through a differential control of the thrust produced by the first and/or second propellers (11, 21) rotating in a clockwise and counter-clockwise directions.

11. The winged multi-copter according to any preceding claim wherein the multi-copter lacks active control surfaces.

12. The winged multi-copter according to any preceding claim wherein it includes an additional second frame (20'), symmetric to the second frame (20) around a central plane perpendicular to the second transverse direction (Y2), the additional second frame (20') supporting at least one additional fixed wing (22') and multiple additional second propellers (21'), some ahead and some behind the at least one additional fixed wing (22');
the additional second frame (20') is connected to the first and second frames (10, 20) through a rotative joint free to rotate about an axis parallel to the first and second transversal directions (Y1, Y2);
the at least one electric source (30) and the control unit (40) are also connected to the additional second propellers (21') and configured to modify the pitch angle of the additional second frame (20'), and of the at least one additional fixed wing (22') attached thereto, through a differential control of the thrust produced by the additional second propellers (21').

13. The winged multi-copter according to any preceding claim wherein the multi-copter lacks passive moment-neutralizing surfaces, and the control unit (40) is configured to compensate for a rotation moment around the second transversal direction (Y2) of the second frame (20), or of the second and of the additional second frame (20, 20'), induced by the aerodynamic behaviour of the fixed wing (22), through a differential control of the thrust produced by the second propellers (21).
